# EUROPÄISCHE PATENTSCHRIFT

(11) **EP 0 901 417 B1**
(45) Veröffentlichungstag und Bekanntmachung des Hinweises auf die Patenterteilung: **27.02.2002**
(21) Anmeldenummer: 97927078.2
(22) Anmeldetag: 28.05.1997
(51) Int. Cl.: B60C 23/04, G08C 13/00, G08C 17/00, G08C 19/00

(54) **VORRICHTUNG ZUR DRAHTLOSEN ÜBERTRAGUNG AUS BEWEGTEN TEILEN**
DEVICE FOR WIRELESS TRANSMISSION FROM MOVING PARTS
DISPOSITIF DE TRANSMISSION SANS FIL A PARTIR D'ELEMENTS MOBILES

(30) Priorität: 29.05.1996 DE 19621354; 24.11.1996 DE 19648531; 27.01.1997 DE 19702768
(43) Veröffentlichungstag der Anmeldung: 17.03.1999
(73) Patentinhaber: IQ-Mobil Electronics GmbH, 82467 Garmisch-Partenkirchen (DE)
(72) Erfinder: BARTELS, Oliver, D-85435 Erding (DE)
(74) Vertreter: Lang, Friedrich, Dipl.-Ing.
(86) Internationale Anmeldenummer: EP9702798
(87) Internationale Veröffentlichungsnummer: WO9745277

(56) Entgegenhaltungen:
- EP-A- 0 045 401
- EP-A- 0 201 149
- EP-A- 0 450 653
- DE-A- 3 107 947
- DE-A- 3 729 420
- DE-A- 3 801 277
- DE-A- 3 801 278
- DE-A- 4 105 669
- US-A- 4 409 586
- US-A- 5 483 827

## Beschreibung

Die Erfindung betrifft eine Vorrichtung zur drahtlosen Übertragung von mindestens einem Meßwert aus bewegten Teilen gemäß den Oberbegriffen der unabhängigen Ansprüche 1, 5 und 9. Eine gattungsmäßige Vorrichtung gemäß den Ansprüchen 1 und 5 ist aus der EP 0 201 149 A2 bekannt. Eine gattungsgemäße Vorrichtung gemäß Anspruch 9 ist aus der DE 31 07 947 A1 bekannt.

Der Erfindung liegt die Problemstellung zugrunde, den Druck und andere Meßwerte aus dem rotierendem Reifen zu ermitteln, in ein elektrisches Signal umzusetzen und anzuzeigen oder z. B. für Druckverlust-Warnmeldungen auszuwerten. Die Ermittlung des Drucks selber und die Umsetzung in eine elektronische Größe ist nach dem Stand der Technik völlig unproblematisch, geeignete Sensoren auf mechanischer oder kapazitiver Basis sowie integrierte Lösungen auf Halbleiterbasis sind hinlänglich bekannt.

Das eigentliche Problem beim Fahrzeug stellt die Datenübermittlung und die Stromversorgung des Drucksensors dar, weil die hohe und stark schwankende Drehzahl des Reifens zusammen mit den Lenk- und Fahrwerksbewegungen und der starken Verschmutzung eine drahtgebundene Übertragung, z. B. über Schleifkontakte, wie auch eine optische oder akustische Übertragung, verbietet.

In hochwertigen Fahrzeugen werden daher Systeme verwendet, die auf induktiver bzw. Funkbasis arbeiten. zu diesem Zweck wird von einem Generator eine Speisefrequenz erzeugt, die mittels einer Spule bzw. Antenne in der Nähe des Reifens bereitgestellt wird. Diese kann dann von einem Schwingkreis oder anderem Resonator absorbiert oder verstärkt werden, wobei der Resonator von einem Druckgeber beeinflußt wird. Diese Beeinflussung der Grundfrequenz kann dann gemessen und ausgewertet werden. Dies geht beispielsweise aus der EP-A-0 450 653 hervor, welche dem Verfahren der induktiven Zugsicherung ähnelt.

Bei all diesen Verfahren ist jedoch die große Störanfälligkeit von Nachteil, die inbesondere aus der Verwendung derselben Frequenz zur Versorgung des Meßwertgebers und zur Messung resultiert. Hierdurch könne auch solche Dämpfungen oder Verstärkungen der Meßfrequenz als Meßwert fehlinterpretiert werden, die nicht vom Meßwertgeber verursacht sind.

Es wäre daher naheliegend, eine aktive Schaltung in dem Meßwertgeber unterzubringen, die von einer Speisefrequenz versorgt wird und auf einer zweiten Frequenz antwortet. Leider ist die Versorgung durch die schnelle Drehung des Rades über einen akzeptablen Zeitraum jedoch nur dann sichergestellt, wenn die Entfernung zwischen Meßwertgeber und Versorgungsspule bzw. Antenne nur wenig schwankt. Dies erzwingt die Positionierung des Meßwertgebers in der Nähe der Achse und damit die Verwendung einer Spezialfelge, die ihrerseits hohe Kosten verursacht.

Der Erfindung liegt somit die Aufgabe zugrunde, den Meßwert zuverlässig auch bei stark schwankenden Übertragungsverhältnissen und ohne eigene Stromversorgung des Meßwertgebers zu übermitteln.

Die Aufgabe wird erfindungsgemäß jeweils durch die in den unabhängigen Patentansprüchen 1,5 und 9 angegebenen Vorrichtungen gelöst, deren Funktionen im folgenden erläutert werden. Vorteilhafte Ausführungsformen sind in den abhängigen Ansprüchen aufgeführt.

Das System nach der ersten Alternative der Erfindung besteht aus einem im Reifen befindlichen Meßwertgeber ohne eigene Stromversorgung sowie einem fest im Fahrzeug montierten Meßsystem bestehend aus einer oder mehreren Antennen und einer oder mehreren Elektronikbaugruppen.

Die von einem oder mehreren Generatoren erzeugte Speisefrequenz wird über eine Antenne in der Nähe des Reifens abgestrahlt. Diese wird nun von dem Meßwertgeber z.B. über einen Schwingkreis aufgenommen und an ein nichtlineares Element, z.B. eine Varaktordiode weitergeleitet. An diesem Element bilden sich nun Oberwellen bzw. bei mehreren Speisefrequenzen die Summen- und Differenzfrequenzen dieser. Des weiteren befindet sich im Meßwertgeber ein Resonator, der auf eine geeignete Oberwelle oder Summenoder Differenzfrequenz abgestimmt ist und vom Meßwert beeinflußt werden kann. Bei der Messung des Reifendrucks bietet sich nun alternativ entweder eine Veränderung der Resonanzfrequenz mittels eines kapazitiven Gebers oder eine Ein- oder Ausschaltung des Resonators mittels Schalter an.

Die so im Meßwertgeber erzeugte und abgestrahlte Meßfrequenz kann nun leicht ohne Störung durch die Speisefrequenz mit einem empfindlichen Empfänger aufgenommen und zur Ermittlung des Meßwertes ausgewertet werden. Der Meßwert wird dann vom Empfänger zur weiteren Auswertung und Anzeige bereitgestellt.

Der Empfänger wird jetzt nicht mehr durch die Speisefrequenz beeinflußt, es sinken die Dynamikanforderungen an dessen Eingangsstufe. Hierdurch wird auch die Verwendung höherer Meß- und Speisefrequenzen möglich, wodurch auch bei hohen Raddrehzahlen genügend Perioden zur sicheren Erkennung bzw. Frequenzbestimmung der Meßfrequenz pro Vorbeilauf des Meßwertgebers an den festen Antennen übertragen werden. Des weiteren erhöht sich bei den nun möglichen höheren Frequenzen die Übertragungsreichweite.

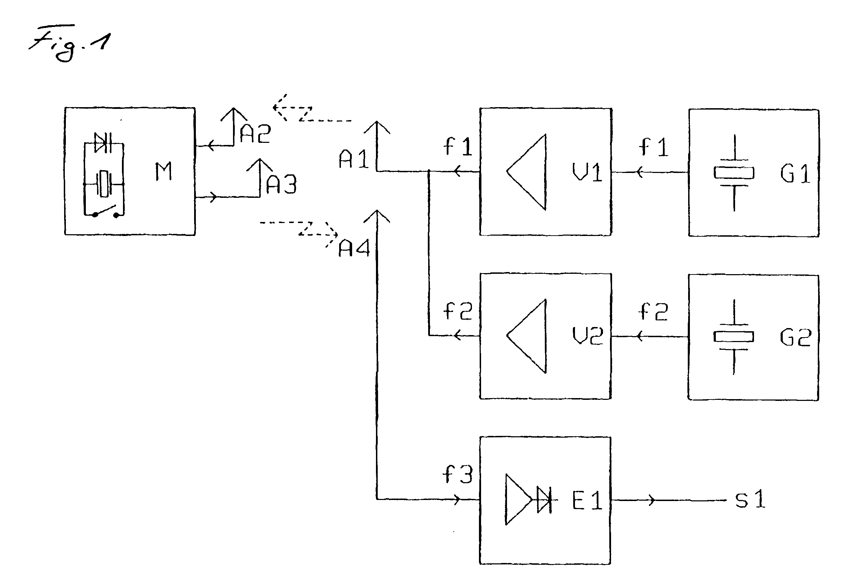

Eine Vorrichtung nach der ersten erfindungsgemäßen Alternative ist beispielhaft in den Fig. 1 bis 3 erläutert. In Fig. 1 werden die Speisefrequenzen von f1=2,41 GHz und f2=2,45 GHz durch die Generatoren G1 und G2 erzeugt, über Verstärker V1 und V2 verstärkt und über eine Antenne A1 dem Reifen zugeleitet.

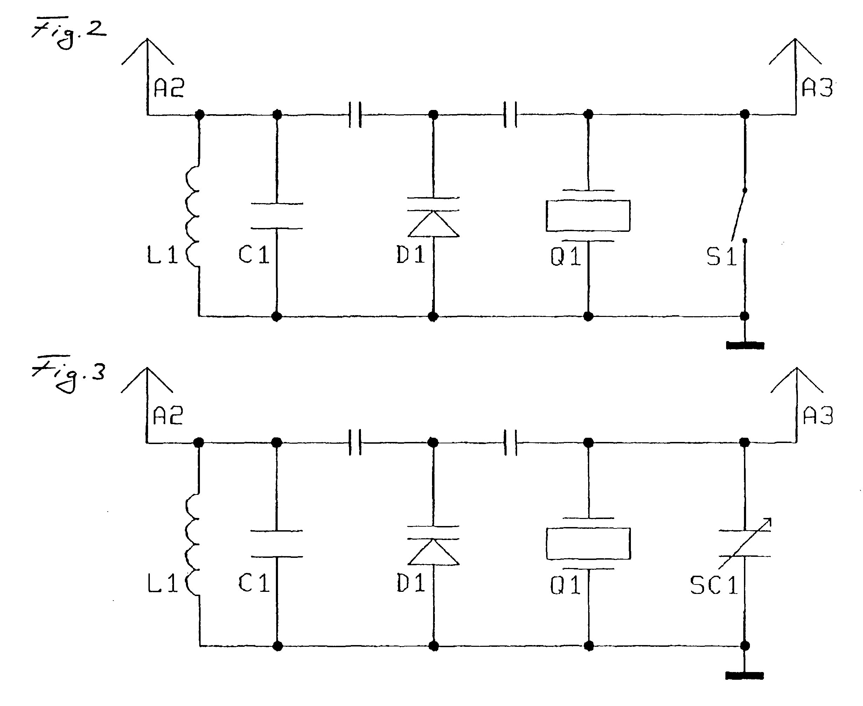

Im Reifen befindet sich der Meßwertgeber M zum Übertragen des Zustandes eines Druckschalters. Der Meßwertgeber M ist im Detail in der Fig. 2 beschrieben. Wenn der Schalter S1 in Fig. 2 bei zu niedrigem Druck geschlossen ist, ist der Geber kurzgeschlossen und außer Funktion. Es wird daher keine Meßfrequenz abgestrahlt. Im anderen Fall wird die Frequenz durch die Antenne A2 mit (Streifenleiter-) Schwingkreis L1/C1 aufgenommen und der Varaktordiode D1 zugeführt. Dort bildet sich die Differenzfrequenz von f3=f2-f1 (=40 MHz), welche den Quarz Q1 anregt und danach über die Antenne A3 abgestrahlt wird.

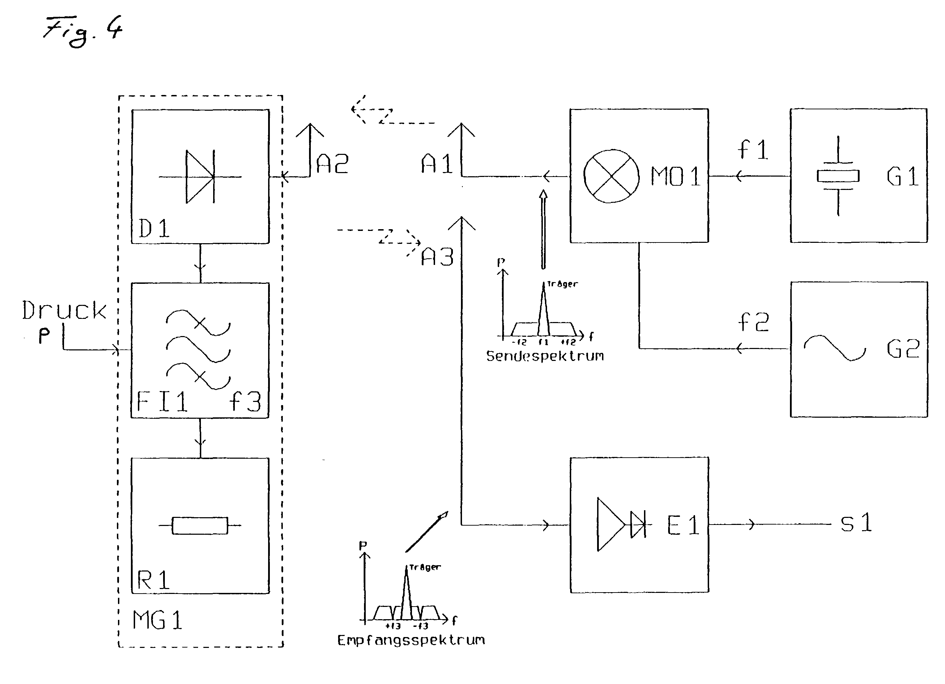

Fig. 3 zeigt eine alternative Konstruktion für den Meßwertgeber M zur Übermittlung kontinuierlicher Meßwerte. Anstelle des Kurzschlusses durch Schalter S1 tritt eine Veränderung der Resonanzfrequenz des Quarzes Q1 durch den kapazitiven Drucksensor SC1.

Die vom Meßwertgeber M abgestrahlte Meßfrequenz f3 kann nun von der Antenne A4 aufgenommen und vom Meßempfänger E1 ausgewertet werden. Der Meßwert steht dann als Signal sl zur Verfügung.

Die Verwendung einer Varaktordiode (Kapazitätsdiode) als nichtlineares elektronisches Bauteil im Resonator bietet sich insbesondere aufgrund des sogenannten parametrischen Verstärkungseffektes an.

In einer besonders vorteilhaften Ausgestaltung der Erfindung werden die Speisefrequenzen alle durch Modulation bzw. Mischung einer einzigen Basis-Speisefrequenz mit einem geeigneten Modulationssignal gleichzeitig erzeugt. Besonders vorteilhaft ist in diesem Zusammenhang die I/Q-Modulation mittels von einem Signalprozessor digital erzeugter Modulationssignale. Hierdurch können gleichzeitig beliebig viele Speisefrequenzen erzeugt werden, ohne daß es einer entsprechenden Zahl Generatoren bedürfte. Durch geeignete Berechnung des Spektrums erfolgt daher bei kontinuierlicher Meßwertübertragung (Fig. 3) in jedem Fall für jeden Meßwert sofort eine Resonanzantwort auf der diesem Meßwert zugeordneten Meßfrequenz. Dadurch entfällt die Notwendigkeit einer langsamen Veränderung ("Sweep") der Speisefrequenz(en) zur Abtastung der Resonanzstelle. Die Modulation kann auch durch ein gefiltertes Pseudo-Zufallssignal (Rauschsignal) erfolgen.

Ebenso bietet sich im Empfänger die Analog/Digital-Wandlung der empfangenen Meßfrequenz bzw. Empfänger-Zwischenfrequenz und digitale Demodulation bzw. Auswertung mittels DDC (Digital Down Converter) und Signalprozessor (Fourieranalyse) an. Die abgestrahlte Meßfrequenz kann so direkt (ohne "Sweep") ermittelt werden.

Nach einmal ermitteltem Meßwert kann zudem das Spektrum energetisch, z.B. durch geeignete Filterung, auf den Erwartungswert des nächsten Meßwertes konzentriert werden, um die Meßgenauigkeit zu erhöhen.

Sehr vorteilhaft ist aus Kostengründen auch die Integration des Meßwertgebers bestehend aus dem(Druck)-sensor zusammen mit dem nichtlinearen elektronischen Bauteil und dem Resonanzelement auf einem hybriden oder integrierten Schaltkreis, wobei anstelle eines Schwingkreises oder Quarzes z.B. auch ein Oberflächenwellenresonator (SAW) Verwendung finden kann, der direkt durch den Meßwert abgestimmt bzw. geschaltet wird.

Weitere Ausgestaltungsmöglichkeiten der Erfindung sind die Zuführung der Speisefrequenz und der Empfang der Meßfrequenz über nur ein (Koaxial-)Kabel zwischen dem festen Steuergerät und den im Radkasten angebrachten Antennen und Trennung der Frequenzen mittels Hoch-, Tief- oder Bandpass.

Des weiteren kann im Meßwertgeber auch ein weiterer Referenz-Resonator untergebracht werden, der unabhängig vom Meßwert immer konstant auf einer zweiten Meßfrequenz ein Signal zurückstrahlt. Hierdurch können Frequenzverschiebungen z.B. durch den Dopplereffekt etc. im Empfänger wieder herausgerechnet werden. Weitere Meßfrequenzen können z.B. zur Übertragung weiterer Meßwerte wie Reifentemperatur oder strukturelle Beanspruchung (Kräfte) verwendet werden.

Eine Weiterbildung besteht darin, daß sich das Modulationssignal aus einem gefilterten (Pseudo-) Zufallssignal ableitet, wobei das resultierende Spektrum energetisch auf die dem Erwartungswert der Meßfrequenz entsprechenden Speisefrequenzen konzentriert wird. Zudem ist vorgesehen, daß in dem nichtlinearen elektronischen Bauteil die Differenzfrequenz zweier Speisefrequenzen als neue Meßfrequenz gebildet wird und daß als Resonator im Meßwertgeber ein Quarz Verwendung findet, der kapazitiv verstimmt wird oder daß als Resonator im Meßwertgeber ein Oberflächenwellenfilter Verwendung findet.

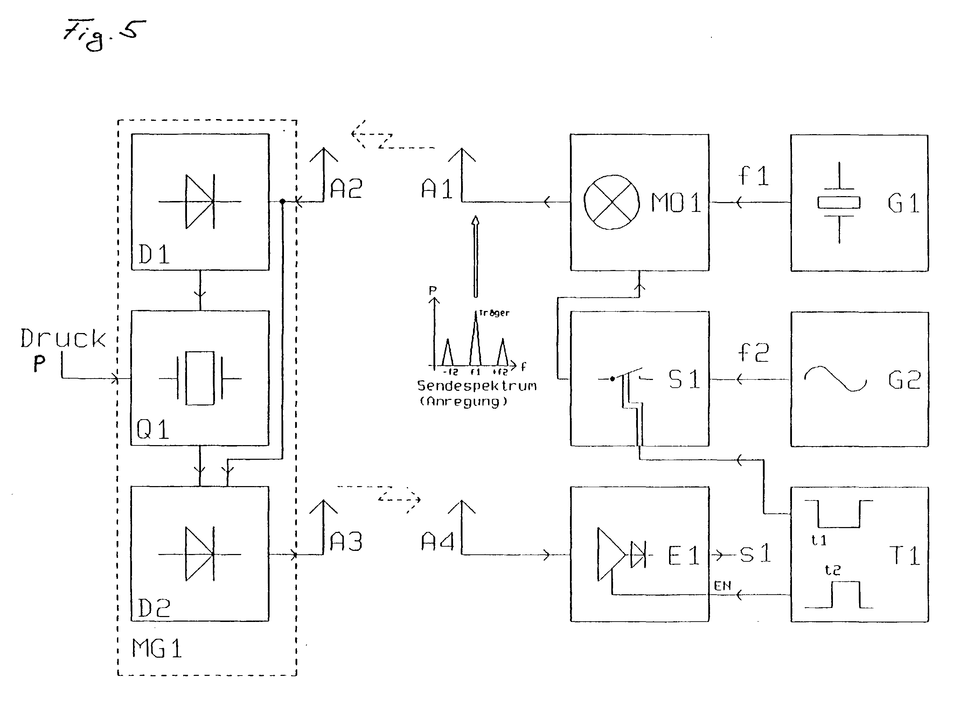

Das System nach der zweiten Alternative der Erfindung besteht aus einem im Reifen befindlichen Meßwertgeber ohne eigene Stromversorgung sowie einem fest im Fahrzeug montierten Meßsystem bestehend aus einer oder mehreren Antennen und einer oder mehreren Elektronikbaugruppen, die in ihrer Gesamtheit nachfolgend unter dem Begriff Steuergerät zusammengefaßt werden. Der Vorteil dieser Vorrichtung liegt darin, daß es mit einem Frequenzband auskommen kann. Eine Vorrichtung der zweiten erfindungsgemäßen Alternative ist in Fig. 4 beispielhaft gezeigt.

In dem Steuergerät befindet sich mindestens ein Hochfrequenzgenerator G1 für ein Trägersignal f1, vorzugsweise im sogenannten Mikrowellen-Frequenzbereich um 2,4GHz, welches von mindestens einem niederfrequenteren Signal f2, erzeugt durch den Generator G2, vorzugweise im Frequenzbereich von 1 bis 30 MHz, moduliert wird. Insbesondere f2 kann in seiner Frequenz (z.B. durch einen Mikrocomputerbefehl) verändert werden, oder es werden mehrere Frequenzen f2 (f2.1 bis f2.n) gleichzeitig aufmoduliert (z.B. durch Rückwärts-Fouriertransformation oder FFT). Die Modulation findet in diesem Beispiel im Modulator MO1 statt, kann alternativ aber auch direkt im Hochfrequenzgenerator (G1) durchgeführt werden. Das resultierende Signal wird verstärkt und in der Nähe des Reifens über eine Antenne A1 abgestrahlt.

Die Modulation ist vorzugsweise eine Amplituden- oder I/Q-Modulation. Gemäß den für solche Modulationen geltenden Gleichungen entstehen im Spektrum links und rechts neben der Trägerfrequenz weitere Seitenbänder, konkret z.B. bei der Amplitudenmodulation bei f1+f2 und f1-f2. Im Falle der Verwendung mehrerer Frequenzen f2 ergibt sich so durch deren Summe ein Seitenbandspektrum, dies ist in der Zeichung ebenfalls beispielhaft dargestellt.

In dem Reifen befindet sich ein Meßwertgeber MG1 (Transponder), bestehend aus mindestens einer Antenne A2, mindestens einer Diode D1, vorzugsweise als Schottky- oder Detektordiode, sowie wenigstens eines im Bereich des Signals f2 frequenzselektiven Absorberelementes mit Absorptionsmaximum bei der Frequenz f3, welches durch den Reifendruck beeinflußt wird. Hierbei kann es sich z.B. um einen Quarz oder ein Keramikfilter handeln, die Beeinflussung verstimmt vorzugsweise dessen Resonanzfrequenz f3 oder die Güte und damit den Grad der Absorption. Ein Keramikfilter wird sinnvollerweise mit einem Widerstand abgeschlossen, in diesem wird die aufgenommene zur Absorption bestimmte Energie in Wärme umgesetzt. In der Zeichnung wurde beispielhaft das Absorberelement aus einem Filter FI1 zusammen mit einem Widerstand R1 gebildet.

Zur Beeinflussung des Absorberelementes kann z.B. ein kapazitiver Drucksensor verwendet werden, natürlich wäre aber auch eine Abschaltung des gesamten Meßwertgebers bei Unterdruck oder anderen zu übertragenden Ereignissen mittels Schalter denkbar. Wichtig ist, daß sich das Absorberelement bezüglich dritter Frequenzen hochohmig verhält. Der Drucksensor bildet im Zeichnungsbeispiel mit dem Filter FI1 eine Einheit.

Ein Quarz wird durch diesen kapazitiven Drucksensor gezogen und dadurch in seiner Resonanzfrequenz beeinflußt.

Bei einem Keramikfilter bietet sich die Veränderung des Abschlußwiderstandes oder anderer Last- oder Blindwiderstände durch den Meßwert an, hierdurch wird die Filtercharakteristik meßbar beeinflußt.

Selbstverständlich können auch ein oder mehrere gewöhnliche Filter z.B. bestehend aus L/C-Schwingkreisen oder R/C-Pässen, die durch resistive, induktive oder kapazitive Sensoren beeinflußt werden, im Absorber verwendet werden.

Der Meßwertgeber hat nun einen besonderen Einfluß auf das in der Nähe des Reifens befindliche elektromagnetische Feld: Die von einem oder vorzugsweise mehreren Generatoren erzeugte modulierte Speisefrequenz wird über eine Antenne in der Nähe des Reifens abgestrahlt. Diese wird nun von dem Meßwertgeber aufgenommen und mittels des nichtlinearen Elementes, z.B. durch Gleichrichtung in der Diode, demoduliert. Hierdurch wird im Meßwertgeber die Modulationsfrequenz f2 zurückgewonnen. Sofern diese nun mit der Resonanzfrequenz f3 des Absorptionselementes übereinstimmt, wird sie belastet und ihre Energie z.B. in Wärme umgesetzt.

Hierdurch wird aber aus dem Feld selektiv Energie entnommen, und zwar z.B. bei einer Amplitudenmodulation ausschließlich bei diesen Seitenbandfrequenzen, die zum Träger etwa den Abstand f3 haben. Sofern die Modulationsfrequenz f2 nun in die Nähe der Frequenz f3 gerät, ensteht eine starke Dämpfung der Seitenbänder f1+f2 und f1-f2. Diese Dämpfung kann nun vom Steuergerät gemessen werden und aus dieser somit auf den Reifendruck und andere Meßwerte geschlossen werden. Hingegen bleiben andere Seitenbandfrequenzen und der Träger von der Dämpfung weitgehend unbeeinflußt.

Diese Unterscheidung zu einer breitbandigen Dämpfung z.B. durch Wassereinfluß macht eine sichere Erkennung des Meßwertgebersignals durch das Steuergerät und die Herausrechnung von Störungen möglich und stellt den wesentlichen Vorteil der Erfindung gegenüber bisherigen Systemen dar. In der Zeichnung wurde das gedämpfte Spektrum mehrerer f2 Frequenzen beispielhaft an der Empfangsantenne A3 angedeutet.

Die Messung der Dämpfung erfolgt vorzugsweise mittels eines Empfängers E1 im Steuergerät mit Antenne A3 in der Nähe des Reifens, hierbei kann auch die Sendeantenne mitverwendet werden. Nach Analyse, z.B. durch Demodulation, und Umrechnung im Empfänger steht dann die Druckinformation als Signal s1 bereit. Der Empfänger ist vorzugsweise ein Überlagerungsempfänger (Superhet), durch Verstimmen des Überlagerungsoszillators können mehrere Frequenzen nacheinander abgefragt werden.

Besonders vorteilhaft ist in diesem Fall die Unterbringung der ersten Eingangsverstärker- und/oder Mischerstufe in miniaturisierter Bauweise in der Antenne selber, ein Mischer kann hierbei vom Sendesignal oder auch mit einer weiteren Frequenz hochfrequenzmäßig (lokales Oszillatorsignal) und mittels Gleichspannungsentkopplung auch mit Versorgungsspannung über ein gemeinsames Antennenkabel versorgt werden. Als wesentlicher Vorteil ergibt sich hier die frequenzmäßige Trennung von Sende- und Empfangssignal und damit die Möglichkeit der Verwendung nur eines (Koaxial-)Antennenkabels für beide Signale und für die Stromversorgung von Vorverstärker und Mischer.

Eine andere Ausführung der Erfindung detektiert das Feld mittels eines an einem Richtkoppler in der Antennenzuleitung angeschlossenen Empfängers, durch den Richtkoppler wird eine Trennung in hin- und rücklaufende Wellen vorgenommen, durch Auswertung beider Signale des Richtkopplers kann auf den Grad der Absorption geschlossen werden.

Bei gleichzeitiger Modulation mit mehreren Frequenzen, sei es durch Rückwärts-Fouriertransformation, Pseudo-Zufallsrauschen und/oder I/Q-Modulation kann das veränderte elektromagnetische Leistungsdichte-Spektrum z.B. durch Digitalisierung mittels A/D-Wandler und Weiterverarbeitung mittels Digital Down Converter und/oder Signalprozessor gleichzeitig auf mehreren SeitenbandFrequenzen abgefragt werden. Die Phaseninformation kann zur Auswertung der Frequenz-Ziehrichtung des Absorptionselementes und damit zur schnellen Ermittlung der Mittenfrequenz (für maximale Absorption) f3 des Absorptionselementes verwendet werden, hier kommt vorzugsweise das Newtonsche Approximationsverfahren zum Einsatz. Daneben ist auch die Auswertung des Frequenzspektrums durch neuronale Netze denkbar. Vorteilhaft sind hier zeitgesteuerte Gewichtungsnetzwerke, wie im Patent DE 4105669 desselben Erfinders beschrieben.

Die Trägerfrequenz f1 sollte mittels eines stabilen Oszillators mit geringem Phasenrauschen erzeugt werden. Durch PLL-Regelung der Frequenz f1 kann mittels Mikrocomputerbefehls festgestellten Störungen und Frequenzbelegungen durch andere Nutzer, z.B. andere Fahrzeuge, gezielt ausgewichen werden, ohne daß dadurch der Kontakt zum Meßwertgeber verloren geht, da es für diesen bei nicht allzu großen Änderungen von f1 nur auf die Modulation ankommt. Der Empfänger muß natürlich ebenfalls entsprechend umgestimmt werden. Diese Möglichkeit des Frequenzwechsels im Störungsfall stellt einen weiteren wesentlichen Vorteil der Erfindung dar.

Die Störungen können über denselben Emfänger E1 erkannt werden, der auch die Dämpfungsauswertung vornimmt. Daneben können sich gleichartige Systeme über gezielte Modulation zusätlicher Informationen über die Frequenzbelegung verständigen, aber auch andere Informationen miteinander austauschen. Denkbar wäre z.B. die Mitbenutzung der Baugruppen mit oder ohne Zusatzantenne zur gegenseitigen Kollisionswarnung von Fahrzeugen.

Die Erzeugung der Modulationsfrequenz(en) f2 erfolgt sinnvollerweise mittels eines D/A Wandlers durch direkte digitale Synthese. Sehr reine Frequenzen können mittels eines sogenannten Phasenakkumulators mit nachfolgender Sinus/Cosinus-Tabelle erzeugt werden. Durch gefilterte Pseudo-Zufalls-Phasensprünge kann dabei die Signalbreite im Spektrum nach Belieben auch ggf. mittels Mikrocomputerbefehl verändert werden.

In einer weiteren vorteilhaften Ausführung der Erfindung erfolgt die Erkennung des Seitenband-Absorptionsmaximums mittels digitaler Phasenregelschleife mit Digitalfiltern und Nutzung des Filterergebnisses zur Änderung des Phaseninkrements des Phasenakkumulators der direkten digitalen Synthese.

Theoretisch ist auch ein Einsatz einer Winkelmodulation (Phasenoder Frequenzmodulation) des Signals f1 durch f2 möglich, da auch hier bei n x (f1+f2) und n x (fl-f2) Seitenbandfrequenzen auftreten, jedoch ist deren Stärke u.a. durch komplizierte Besselfunktionen bestimmt und daher der Einfluß der Absorption schwerer zu ermitteln. Hingegen könnte durch Einsatz eines passiven FM-Detektors im Meßwertgeber, z.B. Ratiodetektor, die Fehlersicherheit weiter verbessert werden.

Zur Versorgung weiterer aktiver Komponenten im Meßwertgeber kann auch ein Teil des Trägersignals durch Gleichrichtung in eine Gleichspannung umgewandelt werden, ebenso kann auch die Dämpfung durch Belastung des Trägers ausgewertet werden.

Die gesamte Steuerung des Systems erfolgt vorzugsweise über einen Mikrocomputer oder Signalprozessor, der auch die weitere Verarbeitung, Umrechnung und Auswertung der Meßwerte übernehmen kann.

Sehr vorteilhaft ist aus Kostengründen auch die Integration des Meßwertgebers bestehend aus dem (Druck-)sensor zusammen mit dem nichtlinearen elektronischem Bauteil und dem Resonanzelement auf einem hybriden oder integrierten Schaltkreis, wobei anstelle eines Keramikfilters oder Quarzes z.B. auch ein Oberflächenwellenresonator (SAW) oder integrierte L/C Schwingkreise Verwendung finden können, die direkt durch den Meßwert abgestimmt bzw. geschaltet werden.

Des weiteren kann im Meßwertgeber auch ein weiteres Referenz-Absorptionselement untergebracht werden, das unabhängig vom Meßwert immer konstant auf einer von der Meßfrequenz f3 unabhängigen Seitenbandfrequenz ein Signal absorbiert. Hierdurch können Frequenzverschiebungen z.B. durch den Dopplereffekt etc. im Empfänger wieder herausgerechnet werden. Weitere Meßfrequenzen f2 können z.B. zur Übertragung weiterer Meßwerte wie Reifentemperatur oder strukturelle Beanspruchung (Kräfte) verwendet werden.

Eine Weiterbildung besteht darin, daß das Absorptionsmaximum des Absorbers im Meßwertgeber durch eine (vorzugsweise digitale) Phasenregelschleife, bestehend aus (vorzugsweise digitalem) Phasenvergleicher, (vorzugsweise digitalem) Filter und frequenzvariablen Oszillator (VCO), vorzugsweise realisiert durch einen digitalen Phasenakkumulator, dessen Inkrement durch den Filterausgangswert gesteuert wird, ermittelt wird.

Vorteilhaft ist, daß das Absorptionsmaximum des Absorbers im Meßwertgeber durch ein nach Bedarf künstlich, insbesondere durch Pseudozufallsrauschen, verbreitertes diskretes Modulationssignal mittels sukzessiver Approximation, insbesondere Newton-Approximation, ermittelt wird.

Weiterhin ist vorgesehen, daß das nichtlineare elektronische Bauteil im Meßwertgeber eine Schottkydiode oder Detektordiode ist.

Bevorzugt ist zudem, daß als Absorber im Meßwertgeber ein Quarz oder Keramikfilter oder Schwingkreisfilter mit Abschlußwiderstand Verwendung findet, wobei der Filter induktiv, kapazitiv oder durch Belastung, jeweils abhängig vom Meßwert, verstimmt wird und daß eine erste Verstärkung und/oder Frequenzumsetzung des Meßsignals, welches aus der Vermessung des elektromagnetischen Feldes resultiert, bereits in der Antennenbaugruppe vorgenommen wird, wodurch ein zweites Kabel für das Meßsignal eingespart werden kann.

Die Vorrichtung nach der dritten Alternative der Erfindung berücksichtigt insbesondere das Problem, daß, bedingt durch die Bauart des Empfängers und die nur schwierig zu erreichende Abschirmung von den Speisesignalen in der Eingangsstufe des Empfängers ebenfalls Mischprodukte gebildet werden, die den Empfang des Meßsignals stören können und nur schwer von diesem zu trennen sind.

Das System gemäß der dritten Alternative der Erfindung besteht aus einem im Reifen befindlichen Meßwertgeber ohne eigene Stromversorgung sowie einem fest im Fahrzeug montierten Meßsystem bestehend aus einer oder mehreren Antennen und einer oder mehreren Elektronikbaugruppen, die in ihrer Gesamtheit nachfolgend unter dem Begriff Steuergerät zusammengefaßt werden. Dieses System ist beispielhaft in Verbindung mit Fig. 5 erläutert.

In dem Steuergerät befindet sich mindestens ein Hochfrequenzgenerator G1 für ein Trägersignal f1, vorzugsweise im sogenannten Mikrowellen-Frequenzbereich um 2,4GHz, welches von mindestens einem niederfrequenteren Signal f2, erzeugt durch den Generator G2, vorzugweise im Frequenzbereich von 1 bis 30 MHz, moduliert wird. Durch diese Modulation werden die nötigen Speisefrequenzen erzeugt. Das resultierende Signal wird verstärkt und in der Nähe des Reifens über eine Antenne A1 abgestrahlt.

Die Modulation ist vorzugsweise eine Amplituden- oder I/Q-Modulation. Gemäß den für solche Modulationen geltenden Gleichungen entstehen im Spektrum links und rechts neben der Trägerfrequenz weitere Seitenbänder, konkret z.B. bei der Amplitudenmodulation bei f1+f2 und f1-f2. Im Falle der Verwendung mehrerer Frequenzen f2 ergibt sich so durch deren Summe ein Seitenbandspektrum, dies ist in der Zeichnung ebenfalls beispielhaft dargestellt.

Die Modulation kann durch den elektronischen Schalter S1 abgeschaltet werden, der Schalter wird von einem Zeitgeber T1 periodisch gesteuert.

In dem Reifen befindet sich ein Meßwertgeber MG1 (Transponder), bestehend aus mindestens einer Antenne A2, einem Empfänger mit mindestens einer Diode D1, vorzugsweise als Schottky- oder Detektordiode, sowie einem Quarz-Resonator Q1, der von dem empfangenen Modulationssignal angeregt wird. Dieser Quarz-Resonator ist nun seinerseits wieder mit einer Modulator- bzw. Mischerdiode D2, vorzugsweise einer Varaktordiode zwecks Nutzung der parametrischen Verstärkung, gekoppelt. Daneben wird er durch den Meßwert verstimmt (gezogen).

Der Resonator (Q1) wird durch den Empfang der Speisefrequenz bei Übereinstimmung der Modulationsfrequenz (f2) der Speisefrequenz mit der Resonatorfrequenz angeregt (indirekte modulierte Anregung).

Zum Zeitpunkt t1 wird nun die Modulation durch den Schalter S1 abgeschaltet und kurz darauf zu einem Zeitpunkt t2 der Empfänger E1 aktiviert (EN-Enable Eingang), t2 folgt ca. lus (Mikrosekunde) auf t1.

Wenn nun die Modulation der Speisefrequenz abgeschaltet wird, so wird der Quarz Q1 noch ca. lms weiterschwingen und aufgrund des weiterhin vorhandenen Trägers diese Speisefrequenz über die Modulatordiode D2 modulieren. Dies geschieht jedoch nur dann, wenn die Modulationsfrequenz f2 den Quarz Q1 schon vorher angeregt hatte, d.h. wenn die Modulationsfrequenz in etwa dem vermuteten Meßwert entspricht. Der Empfänger sieht nun an seiner Antenne A4 ein moduliertes Signal von A3, ohne daß das Speisesignal von A1 moduliert ist und Störungen verursachen könnte, und kann somit aus der Modulation auf den Meßwert schließen. Bei Fehlen der Modulation oder zu schwacher Modulation können weitere vermutete Meßwerte iterativ abgetastet werden (z.B. durch sukzessive Approximation oder Newton-Iteration), bei gänzlichem Unterbleiben jeder Modulation ist von einem Defekt des Meßwertgebers auszugehen, dies kann dem Nutzer signalisiert werden.

Selbstverständlich können anstelle des Quarzes auch andere langnachschwingende Resonatoren, z.B. SAW-, Piezo- oder Stimmgabelresonatoren verwendet werden. Theoretisch wäre auch ein ungedämpfter Schwingkreis denkbar, praktisch wird dies jedoch an der unvermeidlichen Dämpfung scheitern.

Daneben ist anstelle der Abfrage mittels Modulation auch die Abfrage im Basisband ohne Modulator und Demodulator im Meßwertgeber denkbar, wobei jedoch aufgrund der allgemein verfügbaren Frequenzen eher eine Mikrowellenfrequenz mit Modulation in Frage kommt.

Besonders vorteilhaft ist in diesem Fall die Unterbringung der ersten Eingangsverstärker- und/oder Mischerstufe in miniaturisierter Bauweise in der Antenne selber, ein Mischer kann hierbei vom nach t1 verbleibenden unmodulierten Sendesignal (direkte Umsetzung in das Basisband) oder auch mit einer weiteren Frequenz hochfrequenzmäßig (lokales Oszillatorsignal) und mittels Gleichspannungsentkopplung auch mit Versorgungsspannung über ein gemeinsames Antennenkabel versorgt werden. Als wesentlicher Vorteil ergibt sich hier die frequenzmäßige Trennung von Sende- und Empfangssignal und damit die Möglichkeit der Verwendung nur eines (Koaxial-) Antennenkabels für beide Signale und für die Stromversorgung von Vorverstärker und Mischer.

Besonders vorteilhaft ist eine solche Anordnung zusammen mit gerichteten Planarantennen, weil hierdurch gerichtetes Senden zum und Empfangen vom Meßwertgeber mit Trennung beider Signalwege möglich wird.

Bei gleichzeitiger Modulation mit mehreren Frequenzen, sei es durch Rückwärts-Fouriertransformation, Pseudo-Zufallsrauschen und/oder I/Q-Modulation tritt in jedem Fall eine Anregung des Quarzes oder anderen Resonators unabhängig vom Meßsignal ein.

Daneben kann das nachschwingende Antwortsignal z.B. durch Digitalisierung mittels A/D-Wandler und Weiterverarbeitung mittels Digital Down Converter und/oder Signalprozessor gleichzeitig auf mehreren Frequenzen abgefragt werden. Da in der Nachschwingphase nach t1 die Frequenz unbeeinflußt von der Anregung durch die Speisefrequenzmodulation ist, kann so eine präzise Bestimmung des Meßwerts durchgeführt werden. Vorteilhaft ist hier eine Kombination aus Filterung und Frequenzmessung durch Bestimmung der Periodendauer oder eine Anwendung der schnellen Fouriertransformation. Auch die Auswertung der hierbei entstehenden Phaseninformation kann zusätzlich zur Frequenzinformation zur Festlegung des Energiemaximums des Speisesignals (zur Änderungstendenz-Erkennung) bei der nächsten Messung vorteilhaft sein.

Die Trägerfrequenz f1 sollte mittels eines stabilen Oszillators mit geringem Phasenrauschen erzeugt werden. Durch PLL-Regelung der Frequenz f1 kann mittels Mikrocomputerbefehls festgestellten Störungen und Frequenzbelegungen durch andere Nutzer, z.B. andere Fahrzeuge, gezielt ausgewichen werden, ohne daß dadurch der Kontakt zum Meßwertgeber verloren geht, da es für diesen bei nicht allzu großen Änderungen von f1 nur auf die Modulation ankommt. Der Empfänger muß natürlich ebenfalls entsprechend umgestimmt werden. Diese Möglichkeit des Frequenzwechsels im Störungsfall stellt einen weiteren wesentlichen Vorteil der Erfindung dar.

Die Erzeugung der Modulationsfrequenz(en) f2 erfolgt sinnvollerweise mittels eines D/A Wandlers durch direkte digitale Synthese. Sehr reine Frequenzen können mittels eines sogenannten Phasenakkumulators mit nachfolgender Sinus/Cosinus-Tabelle erzeugt werden. Durch gefilterte Pseudo-Zufalls-Phasensprünge kann dabei die Signalbreite im Spektrum nach Belieben auch ggf. mittels Mikrocomputerbefehl verändert werden.

Die Vorgabe der Zeitpunkte t1 und t2 erfolgt sinnvollerweise durch einen prozessorgesteuerten Zeitgeber, entweder per Software oder als Hardware-Timer. Besonders vorteilhaft ist hierbei die Synchronisation beider Zeitpunkte sowie der Wiedereinschaltung zwecks erneuter Anregung mit der Reifendrehung.Hierdurch wird der Meßwertgeber zu einem Zeitpunkt angeregt, in dem er sich besonders nahe an der Antenne des Meßsystems befindet.

Die gesamte Steuerung des Systems erfolgt vorzugsweise über einen Mikrocomputer oder Signalprozessor, der auch die weitere Verarbeitung, Umrechnung und Auswertung der Meßwerte übernehmen kann. Der Mikrocomputer kann auch eine geeignete Staffelung der Anregungen bei mehreren Resonatoren bzw. Meßwertgebern vornehmen, ein optimales Zeitverhalten wird durch Start der Anregung eines weiteren Resonators bereits während der Meßzeit nach t2 oder sogar t1 des vorherigen Resonators auf einer anderen Anregungsfrequenz erreicht.

Sehr vorteilhaft ist aus Kostengründen auch die Integration des Meßwertgebers bestehend aus dem (Druck-)sensor zusammen mit dem nichtlinearen elektronischem Bauteil und dem Resonanzelement auf einem hybriden oder integrierten Schaltkreis.

Des weiteren kann im Meßwertgeber auch ein weiterer Referenz-Quarz oder anderweitiger Resonator untergebracht werden, der unabhängig vom Meßwert immer konstant auf einer von der Meßfrequenz unabhängigen weiteren Frequenz reagiert. Hierdurch können Frequenzverschiebungen z.B. durch den Dopplereffekt etc. im Empfänger wieder herausgerechnet werden. Weitere Meßfrequenzen f2 können z.B. zur Übertragung weiterer Meßwerte wie Reifentemperatur oder strukturelle Beanspruchung (Kräfte) verwendet werden.

Natürlich kann durch Relais- oder elektronische Umschaltung von mehreren Antennen auf eine Elektronikeinheit dieselbe Elektronikeinheit im Multiplexverfahren zum Messen an unterschiedlichen Reifen oder auch am Reserverad verwendet werden.

Selbstverständlich ist die Erfindung nicht auf die Messung des Reifendrucks beschränkt, sondern kann generell zur zuverlässigen Ermittlung von Meßwerten im Bereich schnell bewegter Teile verwendet werden.

Es ist eine bevorzugte Ausführungsform der Erfindung, daß als Resonator ein Quarz verwendet wird, der durch einen kapazitiven oder induktiven Sensor oder mechanisch durch Belastung oder Temperaturänderung verstimmt (gezogen) wird. Weiterhin ist vorgesehen, daß nach Abschaltung der Anregung eine Frequenzbestimmung der Nachschwingung durch Filterung und Periodendauermessung, ggf. nach der notwendigen Demodulation, durchgeführt wird und hieraus der Meßwert durch Umrechnung abgeleitet wird.

Die Erfindung ist dadurch weitergebildet, daß nach erfolgter Anregung des Meßwertgebers die Modulation seitens des speisenden Meßsystems abgeschaltet wird und somit eine weitere Modulation der verbleibenden unmodulierten Speisefrequenz ausschließlich durch den Meßwertgeber erfolgt, die somit ungestört von der speisenden Modulation gemessen werden kann.

Eine andere Ausführungsform der Erfindung besteht darin, daß die nach Anregung und Abschaltung derselben verbleibende Speisefrequenz gleichzeitig zur Mischung im Empfänger des Meßsystems verwendet wird, dessen erste Stufen vorzugsweise mit der Antenne eine bauliche Einheit bilden.

Bevorzugt ist zudem, daß eine gerichtete Anstrahlung des Meßwertgebers und Rückstrahlung von diesem durch Verwendung von Richt-, insbesondere Planarantennen erfolgt und daß die Ein- und Abschaltung der Anregung des Meßwertgebers periodisch durch einen Zeitgeber gesteuert erfolgt, welcher mit der Raddrehung synchronisiert ist.

## Patentansprüche

1. Vorrichtung zur drahtlosen Übertragung von mindestens einem Meßwert aus bewegten Teilen, insbesondere zur Messung des Reifendrucks in Kraftfahrzeugen, bestehend aus
- einem Meßwertgeber (M), insbesondere einem Druckmesser, im bewegten Teil und
- einem relativ dazu ortsfesten Meßsystem, welches seinerseits aus mindestens einer Antenne (A1) in der Nähe des Meßwertgebers (M) sowie mindestens einer Elektronikbaugruppe besteht,
wobei das Meßsystem eine erste Speisefrequenz (f1) erzeugt, diese an den Meßwertgeber (M) abstrahlt (A1) und dieser die erste Speisefrequenz (f1) empfängt (A2), und
wobei der Meßwertgeber (M) aus mindestens einem vom zu messenden Wert beeinflußten Resonator (L1, C1, Q1) gekoppelt mit mindestens einem nichtlinearen elektronischen Bauteil (D1) besteht,
**dadurch gekennzeichnet,**
- **daß** das Meßsystem wenigstens eine zweite Speisefrequenz (f2) erzeugt, diese an den Meßwertgeber (M) abstrahlt (A1) und dieser die zweite Speisefrequenz (f2) empfängt (A2),
- **daß** durch Mischung oder Oberwellenbildung sich in dem nichtlinearen elektronischen Bauteil (D1) Summen- oder Differenzfrequenzen der Speisefrequenzen (f1, f2) bilden,
- **daß** diese im Meßwertgeber (M) gebildeten Summen- oder Differenzfrequenzen den auf eine geeignete Summen- oder Differenzfrequenz abgestimmten Resonator (Ll, C1, Q1) anregen, woraufhin dieser auf seiner Meßfrequenz (f3), die unterschiedlich von den Speisefrequenzen (f1, f2) ist, die Meßwertinformation an einen Empfänger (E1) im Meßsystem sendet (A3), der seinerseits die Meßwertinformation zur weiteren Auswertung zur Verfügung stellt (S1).

2. Vorrichtung nach Anspruch 1,
**dadurch gekennzeichnet,**
**daß** die Speisefrequenzen (f1, f2) durch Modulation einer gemeinsamen Basis-Speisefrequenz mit einem geeigneten Modulationssignal erzeugt sind.

3. Vorrichtung nach Anspruch 1,
**dadurch gekennzeichnet**
**daß** gleichzeitig ein Empfang und eine Auswertung mehrerer Meßfrequenzen (f3) durch Analog/Digital-Wandlung und nachfolgende digitale Signalverarbeitung erfolgt.

4. Vorrichtung nach einem der Ansprüche 1 bis 3,
**dadurch gekennzeichnet,**
**daß** mehrere Meßfrequenzen (f3) zum Übertragen weiterer Meßoder Referenzwerte verwendet sind.

5. Vorrichtung zur drahtlosen Übertragung von mindestens einem Meßwert aus bewegten Teilen, insbesondere zur Messung des Reifendrucks in Kraftfahrzeugen, bestehend aus
- einem Meßwertgeber (MG1), insbesondere einem Druckmesser, im bewegten Teil und
- einem relativ dazu ortsfesten Meßsystem, welches seinerseits aus mindestens einer Antenne (A1) in der Nähe des Meßwertgebers (MG1) sowie mindestens einer Elektronikbaugruppe besteht,
wobei das Meßsystem eine Speisefrequenz erzeugt, diese an den Meßwertgeber (MG1) abstrahlt und dieser die Speisefrequenz empfängt (A2),
**dadurch gekennzeichnet,**
- **daß** die Speisefrequenz gebildet ist durch Modulation von wenigstens zwei Trägersignalen (f1, f2),
- **daß** der Meßwertgeber (MG1) aus mindestens einem frequenzabhängig arbeitenden Absorber (FI1, R1) gekoppelt mit mindestens einem nichtlinearen elektronischen Bauteil (D1) besteht,
- **daß** der Absorber (FI1, R1) in seiner Frequenz- oder Absorptionscharakteristik vom zu messenden Wert beeinflußt ist,
- **daß** ein Zurückgewinnen wenigstens eines (f2) der Trägersignale (f1, f2) durch Demodulation oder Mischung im nichtlinearen elektronischen Bauteil (D1) des Meßwertgebers (MG1) erfolgt,
- **daß** dieses rückgewonnene Trägersignal (f2) dem Absorber (FI1, R1) zugeführt ist, der das rückgewonnene Trägersignal (f2) abhängig vom Meßwert dämpft,
- **daß** die Auswertung dieser Dämpfung durch Vermessung des elektromagnetischen Feldes mittels eines Empfängers (E1) oder durch Überwachung der vor- und zurücklaufenden oder stehenden Wellen in der Speiseleitung im Meßsystem erfolgt und
- **daß** diese ermittelte Dämpfung als Meßwertinformation (S1) zur weiteren Verwendung zur Verfügung steht.

6. Vorrichtung nach Anspruch 5,
**dadurch gekennzeichnet,**
**daß** die Modulation eine Amplitudenmodulation oder eine mit Phasen- und Frequenzmodulation gemischte Amplitudenmodulation, welche auch als I/Q-Modulation bezeichnet wird, ist.

7. Vorrichtung nach Anspruch 5,
**dadurch gekennzeichnet,**
**daß** gleichzeitig ein Empfang und eine Auswertung mehrerer Frequenzen im analogen, aus der Vermessung des elektromagnetischen Feldes stammenden Signals durch Analog/Digital-Wandlung und nachfolgende digitale Signalverarbeitung, insbesondere Verarbeitung durch Fourieranalyse oder durch digitale Mischung und nachfolgende Tiefpaßfilterung (Digital Down Converter), erfolgt.

8. Vorrichtung nach Anspruch 5,
**dadurch gekennzeichnet,**
**daß** ein Erzeugen und Abstrahlen einer oder gleichzeitig mehrerer Modulationsfrequenzen durch Digital/Analog-Wandlung eines digitalen Datenstroms, welcher insbesondere durch direkte digitale Synthese mittels Phasenakkumulator oder durch Rückwärts-Fouriertransformation gebildet ist, erfolgt.

9. Vorrichtung zur drahtlosen Übertragung von mindestens einem Meßwert aus bewegten Teilen, insbesondere zur Messung des Reifendrucks in Kraftfahrzeugen, bestehend aus
- einem Meßwertgeber (MG1), insbesondere einem Druckmesser, im bewegten Teil und
- einem relativ dazu ortsfesten Meßsystem, welches seinerseits aus mindestens einer Antenne (A1) in der Nähe des Meßwertgebers (MG1) sowie mindestens einer Elektronikbaugruppe besteht,
wobei das Meßsystem zumindest eine Speisefrequenz erzeugt, diese an den Meßwertgeber (MG1) abstrahlt und dieser die Speisefrequenz empfängt,
wobei der Meßwertgeber (MG1) über mindestens einen nachschwingenden Resonator (Q1) verfügt, der in seiner Frequenzoder Absorptionscharakteristik vom zu messenden Wert beeinflußt ist, und
wobei ein im Meßsystem vorhandener Empfänger (E1) die Nachschwingungen des Resonators (Q1) erfaßt und daraus durch Frequenzanalyse und Umrechnung den Meßwert ableitet,
**dadurch gekennzeichnet,**
- **daß** ein Modulieren der Speisefrequenz mittels wenigstens einer Modulationsfrequenz (f2) erfolgt,
- **daß** durch den Empfang der Speisefrequenz bei Übereinstimmung der Modulationsfrequenz (f2) der Speisefrequenz mit der Resonatorfrequenz der Resonator (Q1) angeregt ist,
- **daß** das Meßsystem die Modulation der Speisefrequenz regelmäßig nach erfolgter Anregung des Resonators (Q1) abschaltet oder so verändert, daß keine Anregung mehr stattfindet, und
- **daß** der Resonator (Q1) hiernach nachschwingt und dabei diese Nachschwingungen direkt oder indirekt durch Modulation mit dem Meßwert (P) wieder abstrahlt.

10. Vorrichtung nach Anspruch 9,
**dadurch gekennzeichnet,**
**daß** zur indirekten modulierten Anregung das Speisesignal amplitudenmoduliert ist und diese Modulation durch ein nichtlineares Bauteil (D1), insbesondere eine Detektordiode, im Meßwertgeber (MG1) demoduliert und zur Anregung des Resonators (Q1) verwendet ist.

11. Vorrichtung nach Anspruch 9,
**dadurch gekennzeichnet,**
**daß** ein nichtlineares Bauteil (D2) des Meßwertgebers (MG1), insbesondere eine Varaktordiode mit parametrischer Verstärkung, die Nachschwingungen des Resonators (Q1) mit einer nach Abschaltung der Anregung verbleibenden Speisefrequenz mischt und eine mit dem Meßwert modulierte Speisefrequenz als Meßfrequenz durch den Meßwertgeber (MG1) abstrahlt.

12. Vorrichtung nach einem der Ansprüche 1 bis 11,
**dadurch gekennzeichnet,**
**daß** die beanspruchten Funktionen, insbesondere die Funktionen der Elektronikbaugruppen des jeweiligen Meßsystems, nicht durch elektronische Bauteile, sondern ganz oder teilweise mittels eines Computerprogrammes (Software) realisiert sind.

## Claims

1. An apparatus for wire-free transmission of at least one measured value from moving parts, in particular for measuring the tire pressure in motor vehicles, comprising
- a measured value transmitter (M), in particular a pressure meter, in the moving part and
- a measurement system whose position is fixed relative thereto and which, for its part, comprises at least one antenna (A1) in the vicinity of the measured value transmitter (M) as well as at least one electronics assembly,
in which case the measurement system produces a first supply frequency (f1), emits (A1) this to the measured value transmitter (M), and said measured value transmitter (M) receives (A2) the first supply frequency (f1), and
in which case the measured value transmitter (M) comprises at least one resonator (L1, C1, Q1) which is influenced by the value to be measured and is coupled to at least one non-linear electronic component (D1),
**characterized in that**,
- the measurement system produces at least one second supply frequency (f2), emits (A1) this to the measured value transmitter (M), and said measured value transmitter (M) receives (A2) the second supply frequency (f2),
- sum or difference frequencies relating to the supply frequencies (f1, f2) are formed by mixing and forming harmonics in the non-linear electronic component (D1),
- these sum or difference frequencies which are formed in the measured value transmitter (M) excite the resonator (L1, C1, Q1), which is tuned to a suitable sum or difference frequency, whereupon it sends (A3) the measured value information to a receiver (E1) in the measurement system at its measurement frequency (f3), which is different than the supply frequencies (f1, f2), and the receiver (E1), for its part, makes the measured value information available for further evaluation (S1).

2. The apparatus as claimed in claim 1,
**characterized in that**,
the supply frequencies (f1, f2) are produced by modulation of a common basic supply frequency with a suitable modulation signal.

3. The apparatus as claimed in claim 1,
**characterized in that**,
reception and evaluation of a plurality of measurement frequencies (f3) is carried out simultaneously by analog/digital conversion and subsequent digital signal processing.

4. The apparatus as claimed in one of claims 1 to 3,
**characterized in that**,
a plurality of measurement frequencies (f3) are used for transmitting further measured values or reference values.

5. An apparatus for wire-free transmission of at least one measured value from moving parts, in particular for measuring the tire pressure in motor vehicles, comprising
- a measured value transmitter (MG1), in particular a pressure meter, in the moving part and
- a measurement system whose position is fixed relative thereto and which, for its part, comprises at least one antenna (A1) in the vicinity of the measured value transmitter (MG1) as well as at least one electronics assembly, in which case the measurement system produces a supply frequency, emits this to the measured value transmitter (MG1), and said measured value transmitter (MG1) receives (A2) the supply frequency,
**characterized in that**,
- the supply frequency is formed by modulation of at least two carrier signals (f1, f2),
- the measured value transmitter (MG1) comprises at least one absorber (FI1, R1) which operates as a function of frequency and is coupled to at least one non-linear electronic component (D1),
- the frequency characteristic or absorption characteristic of the absorber (FI1, R1) is influenced by the value to be measured,
- at least one (f2) of the carrier signals (f1, f2) is recovered by demodulating or mixing in the non-linear electronic component (D1) of the measured value transmitter (MG1),
- this recovered carrier signal (f2) is supplied to the absorber (FI1, R1), which attenuates the recovered carrier signal (f2) as a function of the measured value,
- the evaluation of this attenuation is carried out by measuring the electromagnetic field by means of a receiver (E1) or by monitoring the forward and backward or standing waves in the supply line in the measurement system, and
- this determined attenuation is available as measured value information (S1) for further use.

6. The apparatus as claimed in claim 5,
**characterized in that**,
the modulation is amplitude modulation or amplitude modulation which is mixed with phase modulation and frequency modulation, and which is also referred to as I/Q modulation.

7. The apparatus as claimed in claim 5,
**characterized in that**,
reception and evaluation of a plurality of frequencies is carried out simultaneously in the analog signal originating from the measurement of the electromagnetic field by digital/analog conversion and subsequent digital signal processing, in particular processing by Fourier analysis or by digital mixing and subsequent low-pass filtering (Digital Down Converter).

8. The apparatus as claimed in claim 5,
**characterized in that**,
production and emission of one or more modulation frequencies simultaneously is carried out by digital/analog conversion of a digital data stream, which is formed in particular by direct digital synthesis by means of a phase accumulator or by reverse Fourier transformation.

9. An apparatus for wire-free transmission of at least one measured value from moving parts, in particular for measuring the tire pressure in motor vehicles, comprising
- a measured value transmitter (MG1), in particular a pressure meter, in the moving part, and
- a measurement system whose position is fixed relative thereto and which, for its part, comprises at least one antenna (A1) in the vicinity of the measured value transmitter (MG1) as well as at least one electronic assembly, in which case the measurement system produces at least one supply frequency, emits this to the measured value transmitter (MG1), and said measured value transmitter (MG1) receives the supply frequency, in which case the measured value transmitter (MG1) has at least one ringing resonator (Q1) whose frequency characteristic or absorption characteristic is influenced by the value to be measured, and in which case a receiver (E1) which is present in the measurement system detects the ringing of the resonator (Q1) and uses this to derive the measured value by frequency analysis and conversion,
**characterized in that**,
- the supply frequency is modulated by means of at least one modulation frequency (f2),
- the resonator (Q1) is excited by reception of the supply frequency if the modulation frequency (f2) of the supply frequency corresponds to the resonator frequency,
- once excitation of the resonator (Q1) has taken place, the measurement system regularly switches the modulation of the supply frequency off or varies the modulation such that excitation no longer takes place, and
- the resonator (Q1) rings after this and, at the same time, this ringing is emitted again directly or indirectly by modulation with the measured value (P).

10. The apparatus as claimed in claim 9,
**characterized in that**,
the supply signal is amplitude-modulated for indirect modulated excitation, and this modulation is demodulated by a non-linear component (D1), in particular a detector diode, in the measured value transmitter (MG1), and is used for excitation of the resonator (Q1).

11. The apparatus as claimed in claim 9,
**characterized in that**,
a non-linear component (D2) in the measured value transmitter (MG1), in particular a varactor diode with parametric gain, mixes the ringing of the resonator (Q1) with a supply frequency which remains after the excitation has been switched off and emits a supply frequency, which is modulated with the measured value, as a measurement frequency by the measured value transmitter (MG1).

12. The apparatus as claimed in one of claims 1 to 11,
**characterized in that**,
the claimed functions, in particular the functions of the electronic assemblies in the respective measurement system, are not provided by electronic components but entirely or partially by means of a computer program (software).

## Revendications

1. Dispositif de transmission sans fil d'au moins une valeur de mesure à partir de pièces mobiles, en particulier pour la mesure de la pression des pneumatiques dans des véhicules à moteur, composé de
- un capteur (M) de valeur de mesure, en particulier un manomètre, dans la partie mobile, et
- un système de mesure stationnaire par rapport à celui-ci, qui se compose quant à lui d'au moins une antenne (A1) à proximité du capteur (M) de valeur de mesure et d'au moins un ensemble électronique,
le système de mesure produisant une première fréquence d'alimentation (f1), l'envoyant (A1) au capteur (M) de valeur de mesure et celui-ci recevant (A2) la première fréquence d'alimentation (f1), et
le capteur (M) de valeur de mesure se composant d'au moins un résonateur (L1, C1, Q1) influencé par la valeur à mesurer et couplé à au moins un composant électronique non linéaire (D1),
***caractérisé***
- ***en ce que*** le système de mesure produit au moins une deuxième fréquence d'alimentation (f2), l'envoie (A1) au capteur (M) de valeur de mesure et celui-ci reçoit (A2) la deuxième fréquence d'alimentation (f2),
- ***en ce que*** par mélange ou par formation d'harmoniques, des fréquences de somme ou de différence des fréquences d'alimentation (f1, f2) se forment dans le composant électronique non-linéaire (D1),
- ***en ce que*** ces fréquences de somme ou de différence formées dans le capteur (M) de valeur de mesure excitent le résonateur (L1, C1, Q1) accordé sur une fréquence de somme ou de différence appropriée, après quoi celui-ci envoie sur sa fréquence de mesure (f3), qui est différente des fréquences d'alimentation (f1, f2), l'information de valeur de mesure à un récepteur (E1) dans le système de mesure, qui met ensuite l'information de valeur de mesure à la disposition (S1) d'une exploitation ultérieure.

2. Dispositif selon la Revendication 1, ***caractérisé en ce que*** les fréquences d'alimentation (f1, f2) sont produites par modulation d'une fréquence d'alimentation de base commune avec un signal de modulation approprié.

3. Dispositif selon la Revendication 1, ***caractérisé en ce qu***'une réception et une exploitation de plusieurs fréquences de mesure (f3) par conversion analogique/numérique et traitement ultérieur du signal ont lieu simultanément.

4. Dispositif selon l'une quelconque des Revendications 1 à 3, ***caractérisé en ce que*** plusieurs fréquences de mesure (f3) sont employées pour transmettre d'autres valeurs de mesure ou de référence.

5. Dispositif de transmission sans fil d'au moins une valeur de mesure à partir de pièces mobiles, en particulier pour la mesure de la pression des pneumatiques dans des véhicules à moteur, composé de
- un capteur (MG1) de valeur de mesure, en particulier un manomètre, dans la partie mobile, et
- un système de mesure stationnaire par rapport à celui-ci, qui se compose quant à lui d'au moins une antenne (A1) à proximité du capteur (MG1) de valeur de mesure et d'au moins un ensemble électronique,
le système de mesure produisant une fréquence d'alimentation, l'envoyant au capteur (MG1) de valeur de mesure et celui-ci recevant (A2) la fréquence d'alimentation, et
***caractérisé***
- ***en ce que*** la fréquence d'alimentation est formée par modulation d'au moins deux signaux (f1, f2) de porteuse ,
- ***en ce que*** le capteur (MG1) de valeur de mesure se compose d'au moins un absorbeur (FI1, R1) travaillant de manière indépendante de la fréquence, couplé à au moins un composant électronique non-linéaire (D1),
- ***en ce que*** l'absorbeur (FI1, R1) a des caractéristiques de fréquence ou d'absorption qui dépendent de la valeur à mesurer,
- ***en ce que*** au moins l'un (f2) des signaux (f1, f2) de porteuse est récupéré par démodulation ou mélange dans le composant électronique non-linéaire (D1) du capteur (MG1) de valeur de mesure,
- ***en ce que*** ce signal (f2) de porteuse récupéré est renvoyé à l'absorbeur (FI1, R1), lequel atténue le signal (f2) de porteuse récupéré en fonction de la valeur de mesure,
- ***en ce que*** l'exploitation de cette atténuation par mesure du champ électromagnétique au moyen d'un récepteur (E1) ou par surveillance des ondes directes, récurrentes ou stationnaires, est effectuée sur la ligne d'alimentation dans le système de mesure, et
- ***en ce que*** cette atténuation évaluée est disponible comme information (S1) de valeur de mesure pour une utilisation ultérieure.

6. Dispositif selon la Revendication 5, ***caractérisé en ce que*** la modulation est une modulation d'amplitude ou une modulation d'amplitude mêlée à une modulation de phase ou de fréquence, qui est également qualifiée de modulation I/Q.

7. Dispositif selon la Revendication 5, ***caractérisé en ce qu***'une réception et une exploitation de plusieurs fréquences dans le signal analogique provenant de la mesure du champ électromagnétique par conversion analogique/numérique puis traitement numérique du signal, en particulier traitement par analyse de Fourier ou par mélange numérique puis filtrage passe-bas (digital down converter) sont effectuées simultanément.

8. Dispositif selon la Revendication 5, ***caractérisé en ce qu***'une production et une émission d'une ou simultanément plusieurs fréquences de modulation par conversion numérique/analogique d'un flux de données, lequel est formé en particulier par synthèse numérique directe au moyen d'un accumulateur de phase ou par transformation arrière de Fourier, sont effectuées.

9. Dispositif de transmission sans fil d'au moins une valeur de mesure à partir de pièces mobiles, en particulier pour la mesure de la pression des pneumatiques dans des véhicules à moteur, composé de
- un capteur (MG1) de valeur de mesure, en particulier un manomètre, dans la partie mobile, et
- un système de mesure stationnaire par rapport à celui-ci, qui se compose quant à lui d'au moins une antenne (A1) à proximité du capteur de valeur de mesure (MG1) et d'au moins un ensemble électronique,
le système de mesure produisant au moins une fréquence d'alimentation, l'envoyant au capteur (MG1) de valeur de mesure et celui-ci recevant la fréquence d'alimentation, et
le capteur (MG1) de valeur de mesure disposant d'au moins un résonateur (Q1) à oscillations ultérieures, dont les caractéristiques de fréquence ou d'absorption sont influencée par la valeur à mesurer, et
un récepteur (E1) présent dans le système de mesure détectant les oscillations ultérieures du résonateur (Q1) et en déduisant la valeur de mesure par analyse de fréquence et transformation,
***caractérisé***
***en ce qu***'une modulation de la fréquence d'alimentation au moyen d'au moins une fréquence de modulation (f2) a lieu,
***en ce que*** le résonateur (Q1) est excité par la réception de la fréquence d'alimentation en cas de coïncidence de la fréquence de modulation (f2) de la fréquence d'alimentation avec la fréquence du résonateur,
***en ce que*** le système de mesure arrête régulièrement la modulation de la fréquence d'alimentation après l'excitation du résonateur (Q1) ou la modifie de telle manière qu'aucune excitation n'a plus lieu, et
***en ce que*** le résonateur (Q1) continue à osciller après cela et renvoie ces oscillations ultérieures directement ou indirectement par modulation avec la valeur (P) de mesure.

10. Dispositif selon la Revendication 9, ***caractérisé en ce que***, pour l'excitation modulée indirecte, le signal d'alimentation est modulé en amplitude et cette modulation est démodulée par un composant non-linéaire (D1), en particulier une diode détectrice, dans le capteur (MG1) de valeur de mesure et employée pour exciter le résonateur (Q1).

11. Dispositif selon la Revendication 9, ***caractérisé en ce qu***'un composant non linéaire (D2) du capteur (MG1) de valeur de mesure, en particulier une diode varactor à amplification paramétrique, mélange les oscillations ultérieures du résonateur (Q1) à une fréquence d'alimentation restant après l'arrêt de l'excitation et émet par le capteur (MG1) de valeur de mesure une fréquence d'alimentation modulée avec la valeur de mesure en tant que fréquence de mesure.

12. Dispositif selon l'une quelconque des Revendications 1 à 11, ***caractérisé en ce que*** les fonctions revendiquées, en particulier les fonctions des composants électroniques du système de mesure concerné, ne sont pas réalisées par des composants électroniques, mais entièrement ou partiellement par un programme informatique (logiciel).
